(19) Europäisches Patentamt / European Patent Office / Office européen des brevets

(11) **EP 2 456 258 A1**

(12) **EUROPEAN PATENT APPLICATION**
published in accordance with Art. 153(4) EPC

(43) Date of publication:
**23.05.2012 Bulletin 2012/21**

(51) Int Cl.:
*H04W 28/06* (2009.01)   *H04W 52/50* (2009.01)
*H04W 74/00* (2009.01)

(21) Application number: **09847312.7**

(22) Date of filing: **14.07.2009**

(86) International application number:
**PCT/JP2009/062719**

(87) International publication number:
**WO 2011/007414 (20.01.2011 Gazette 2011/03)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Fujitsu Limited**
**Kawasaki-shi, Kanagawa 211-8588 (JP)**

(72) Inventors:
 • **SATO, Tomonori**
  **Kawasaki-shi**
  **Kanagawa 211-8588 (JP)**

 • **KAWASAKI, Toshio**
  **Kawasaki-shi**
  **Kanagawa 211-8588 (JP)**
 • **OHTA, Yoshiaki**
  **Kawasaki-shi**
  **Kanagawa 211-8588 (JP)**

(74) Representative: **Holz, Ulrike et al**
 **Haseltine Lake LLP**
 **Lincoln House, 5th Floor**
 **300 High Holborn**
 **GB-London WC1V 7JH (GB)**

(54) **RADIO COMMUNICATION SYSTEM, BASE STATION, MOBILE STATION, AND RADIO COMMUNICATION METHOD**

(57)   A wireless communication system includes a mobile station and a base station. The mobile station has a selector and a transmitter. The selector selects 1 or more arbitrary signal sequences from among prepared signal sequences and selects 1 or more arbitrary intervals from among intervals included in a given period. The transmitter transmits the selected signal sequence by the selected interval. The base station has a receiver and an identifier. The receiver receives a signal transmitted from the mobile station. The identifier identifies the mobile station, based on a correspondence value in each interval of the received signal.

## FIG.1

**Description**

TECHNICAL FIELD

The present invention relates to a wireless communication system, a base station, a mobile station, and a wireless communication method.

BACKGROUND ART

Base station apparatuses and wireless communications systems that realize communication using a preamble that is of the minimum required length are commonly known, where during the first negotiation of the communication, one device notifies the communication counterpart device of the required preamble length. For example, the device determines the preamble length that a wireless terminal apparatus, from which a link channel establishment request has been received, can accommodate and selects a preamble length of a data channel. If the preamble length is long, a response indicating that communication will be performed at the long preamble length is given to the wireless terminal apparatus from the base station, ending the negotiation. On the other hand, if the preamble length is short, a response indicating that communication will be performed at the short preamble length is given to the wireless terminal apparatus from the base station, ending the negotiation (see, for example, Patent Document 1).

Patent Document 1 Japanese Laid-Open Patent Publication No. 2004-297338

DISCLOSURE OF INVENTION

PROBLEM TO BE SOLVED BY THE INVENTION

In the conventional technology, after a link has been established between the mobile station and the base station, a preamble length in a data channel is selected according to the modulation scheme. Meanwhile, before the link between the mobile station and the base station is established, for example, when the mobile station first connects to the base station, when the mobile station reconnects with the base station after losing the connection, or when the mobile station is handed over between base stations, the mobile base station arbitrarily selects information from among preliminarily prepared identification information and transmits the selected information to the base station. However, since the number of information items is limited, a different mobile station may use the same information and negotiate with the base station at the same time, in which case a problem arises in that the two mobile stations cannot be discriminated at the base station.

An object of the disclosed wireless communication system, base station, mobile station, and wireless communication method is to enable mobile stations to be discriminated at the base station.

MEANS FOR SOLVING PROBLEM

The wireless communication system includes a mobile station and a base station. The mobile station has a selector and a transmitter. The selector selects 1 or more arbitrary signal sequences from among prepared signal sequences, divides a given period into N intervals (where, N is an integer of 2 or more), and from among the N intervals selects X arbitrary intervals (where, X is positive integer and X≤N). The transmitter transmits the signal sequence corresponding to the interval selected by the selector. The base station has a receiver and an identifier. The receiver receives a signal transmitted from the mobile station. The identifier identifies the mobile station, based on a correspondence value in each interval of the signal sequence received by the receiver.

EFFECT OF THE INVENTION

According to the disclosed wireless communication system, base station, mobile station, and wireless communication method, different mobile stations can be discriminated at the base station.

BRIEF DESCRIPTION OF DRAWINGS

FIG. 1 is a block diagram of a wireless communication system according to a first embodiment;
FIG. 2 is a flowchart of a wireless communication method according to the first embodiment;
FIG. 3 is a block diagram of a mobile station according to a second embodiment;

FIG. 4 is a diagram of an example of transmission patterns in the second embodiment;
FIG. 5 is a block diagram of a base station according to the second embodiment;
FIG. 6 is a block diagram of an identifier of the base station according to the second embodiment;
FIG. 7 is a diagram of one example of arrival timing in the second embodiment;
FIG. 8 is a graph of an example of correspondence value detection results in the second embodiment;
FIG. 9 is a diagram of one example of a frame format of the call-request response in the second embodiment;
FIG. 10 is a sequence diagram of one example of a method of giving notification of the call-request response in the second embodiment;
FIG. 11 is a diagram of another example of a frame format of a call-request response in the second embodiment;
FIG. 12 is a block diagram of the identifier of the base station according to a third embodiment;
FIG. 13 is a diagram of one example of arrival timing in a fourth embodiment;
FIG. 14 is a graph of an example of correspondence value detection results in the fourth embodiment;
FIG. 15 is a graph of an example of correspondence value detection results in the fourth embodiment;
FIG. 16 is a graph of an example of correspondence value detection results in the fourth embodiment;
FIG. 17 is a table of one example of correspondence value detection results in the fourth embodiment;
FIG. 18 is a block diagram of the identifier of the base station according to the fourth embodiment; and
FIG. 19 is a block diagram of the identifier of the base station according to the fourth embodiment.

BEST MODE(S) FOR CARRYING OUT THE INVENTION

Preferred embodiments of a wireless communication system, a base station, a mobile station, and a wireless communication method according to the present invention will be described in detail with reference to the accompanying drawings. The present invention is not limited by the embodiments.

In the wireless communication system according to each embodiment, for example, negotiation is performed when a mobile station first connects to a base station, when a mobile station reconnects to the base station after connection has been lost, when a mobile station is handed over between base stations, etc. Consequent to the negotiation, a link between the mobile station and the base station is established. Signal sequences that the mobile station transmits to the base station during negotiation are prepared. Further, in the wireless communication system according to the embodiments, a given period includes multiple intervals. For example, a given period is divided into multiple intervals. Each mobile station and the base station share information related to the signal sequences transmitted by the mobile stations to the base station during negotiation and information related to the given period and the intervals.

(First embodiment)

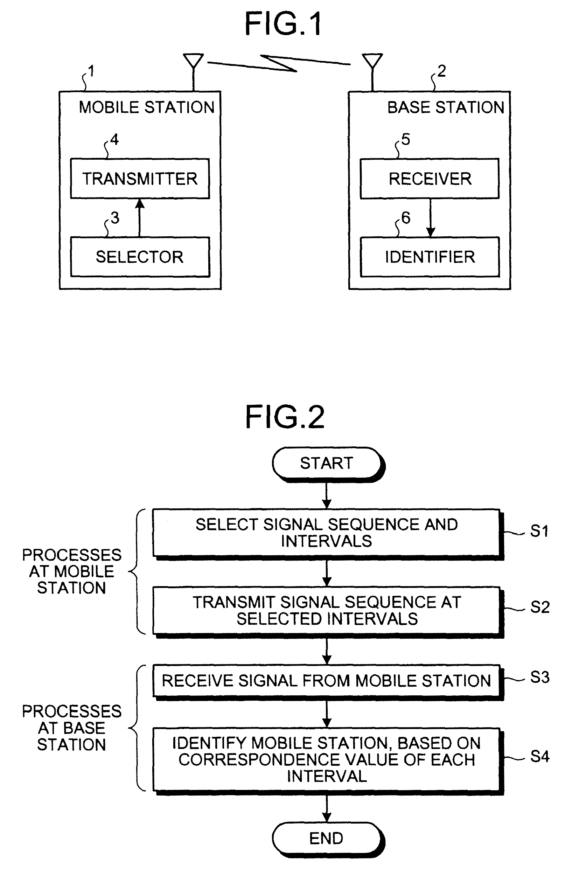

FIG. 1 is a block diagram of the wireless communication system according to a first embodiment. As depicted in FIG. 1, the wireless communication system includes a mobile station 1 and a base station 2. The mobile station 1 has a selector 3 and a transmitter 4. The selector 3 selects an arbitrary signal sequence from among preliminarily prepared signal sequences. The selector 3 further selects 1 or more arbitrary intervals from among the intervals included in the given period. The transmitter 4 transmits the signal sequence selected by the selector 3, at the interval(s) selected by the selector 3. The base station 2 has a receiver 5 and an identifier 6. The receiver 5 receives signals transmitted from the mobile station 1. For example, the receiver 5 receives the signal sequence transmitted from the mobile station 1. Based on a correspondence value in each interval of the signal sequence received from the receiver 5, the identifier 6 identifies the mobile station 1, which is the source of the signal sequence. Multiple mobile stations 1 may be present. Multiple base stations 2 may be present.

FIG. 2 is a flowchart of a wireless communication method according to the first embodiment. As depicted in FIG. 2, when the process of identifying the mobile station begins during negotiation, the mobile station selects an arbitrary signal sequence from among preliminarily prepared signal sequences. Further, the mobile station selects 1 or more intervals from among the intervals included in a given period (step S1). The mobile station, at the interval(s) selected at step S1 transmits the signal sequence selected at step S1 (step S2). The base station receives the signals transmitted from the mobile station (step S3). The signal received by the base station includes the signal sequence selected by the mobile station. Subsequently, the base station identifies the mobile station that is the transmission source of the signal sequence, based on the entire signal sequence of the signal received at step S3 and a correspondence value in each interval (step S4). With this the mobile station identification process during negotiation ends. Subsequently, the base station sends a response to the mobile station and a link between the base station the mobile station is established by a predetermined procedure.

According to the first embodiment, during the negotiation when a link between a mobile station and the base station is established and a signal sequence transmitted by the mobile station is received, the base station can identify the mobile station by the pattern by which the signal sequence arrives at intervals among the intervals of the given period. Therefore, even when a different mobile station selects the same signal sequence and simultaneously transmits the signal sequence to the base station, if the pattern that the mobile station transmits the signal sequence differs, the base station can recognize that link establishment requests have been received from different mobile stations. On the contrary, when there is only pattern for transmitting the signal sequence, i.e., in a configuration where the base station identifies the mobile stations by only the signal sequence, the following disadvantages arise. When different mobile stations select the same signal sequence and simultaneously transmit the signal sequence to the base station, depending on the distance between the base station and each mobile station and the signal environment, deviation (delay) of the reception timing at the base station occurs. Even if the base station receives the signal sequences at different timings, since the received signal sequences are the same, the base station determines that the signal sequences are received from the same mobile station by multiple paths. Further, the base station sends a response to what the base station thinks is the same mobile station. Upon receiving a response from the base station, each mobile station that has selected the same signal sequence transmits to the base station, unique information identifying the mobile station, but since the unique information is from different mobile stations, interference occurs and the base station cannot demodulate the information. Consequently, link establishment cannot be properly performed. According to the first embodiment, the occurrence of such disadvantages can be suppressed, enabling discrimination of different mobile stations by the base station.

(Second embodiment)

The wireless communication system of the first embodiment can be applied to a system such as, for example, a Long Term Evolution (LTE) system or an LTE-Advanced system (an expansion of LTE), in which an arbitrary signal sequence is selected from among prepared signal sequences and a link is established between a mobile station and a base station. As one example, in the second embodiment, a case of LTE will be described.

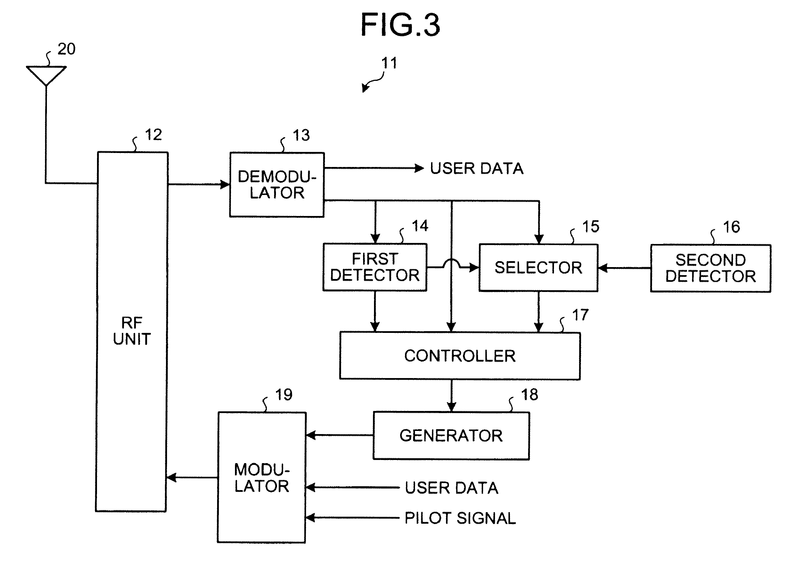

FIG. 3 is a block diagram of the mobile station according to the second embodiment. As depicted in FIG. 3, a mobile station 11 includes an RF unit 12, a demodulator 13, a first detector 14, a selector 15, a second detector 16, a controller 17, a generator 18, a modulator 19, and an antenna 20. The second detector 16 detects the reception level of a notify signal transmitted from a base station. The selector 15, based on detection results obtained by the second detector 16, selects a preamble number indicating the signal sequence number of a call request signal or a wireless resource of an interval, etc. for transmitting the call request signal. Between the mobile station 11 and the base station, a signal sequence is preliminarily determined for each preamble number. The controller 17 controls the generation of a signal at the generator 18, based on the wireless resource selected by the selector 15. The controller 17 further detects from a call-request response signal from the base station, control information such as timing advance (TA) information. Timing advance information is information concerning the amount of deviation from the reference timing of the base station. The first detector 14 calculates timing advance information from the call-request response signal. The generator 18 generates a call request signal and a connection request signal, based on an output signal of the controller 17. The modulator 19 modulates transmission signals such as the call request signal, the connection request signal, etc. generated by the generator 18. The modulator 19 further modulates user data and a pilot signal. The RF unit 12 converts into a wireless signal, a baseband signal output from the modulator 19. The wireless signal output from the RF unit 12 is transmitted from the antenna 20. The RF unit 12 converts into a baseband signal, a wireless signal received by the antenna 20. The demodulator 13 demodulates the baseband signal output from the RF unit 12, and outputs various types of control information and user data. The controller 17, the generator 18, the modulator 19, the RF unit 12, and the antenna 20 operate as the transmitter of the first embodiment.

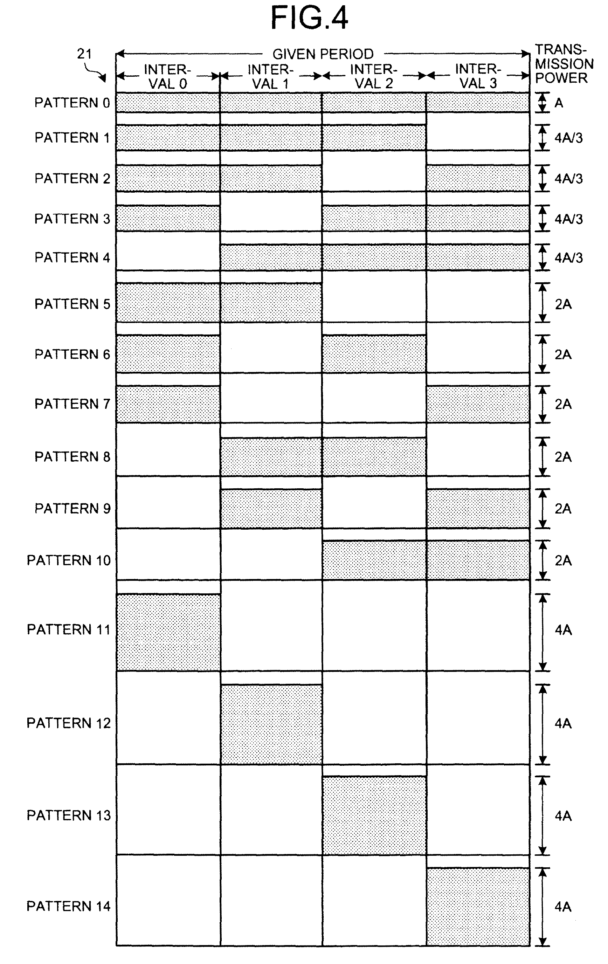

FIG. 4 is a diagram of an example of transmission patterns in the second embodiment. In a transmission pattern chart 21 depicted in FIG. 4, a given period is divided into 4 intervals and intervals transmitting the signal sequence are shaded. As depicted in FIG. 4, for example, there are 15 patterns, from 0 to 14. For instance, each pattern is as follows. (1) In pattern 0, the signal sequence is transmitted by all of the intervals, interval 0, interval 1, interval 2, and interval 3. (2) In pattern 1, pattern 2, pattern 3, and pattern 4, the signal sequence is transmitted from 3 intervals among interval 0, interval 1, interval 2, and interval 3. The combinations of 3 intervals transmitting the signal sequence mutually differ. (3) In pattern 5, pattern 6, pattern 7, pattern 8, pattern 9, and pattern 10, the signal sequence is transmitted from 2 intervals among interval 0, interval 1, interval 2, and interval 3. The combinations of 2 intervals mutually differ. (4) In pattern 11, pattern 12, pattern 13, and pattern 14, the signal sequence is transmitted from 1 interval among interval 0, interval 1, interval 2, and interval 3. The interval in each pattern differs.

For each of the pattern types (1) to (4), the total transmission power in the given period may be the same. For example, if the transmission power of each interval in pattern type (1) is A, the transmission power of each interval in pattern type (2), pattern type (3), and pattern type (4) are respectively 4A/3, 2A, and 4A. For example, by adjusting the amplitude of the signal transmitted by each interval, the amplitude of each interval can be adjusted. In this manner, by controlling the transmission power, for any of the patterns, the total transmission power in the given period is 4A. If the total transmission power in the given period of each pattern is constant, as described hereinafter, when the correspondence values are obtained by the base station to identify the mobile station, the mobile station can be easily identified. The given period may divided into 2, 3, 5, or more intervals. When the given period is divided by n, the maximum number of patterns is expressed by the equation below.

$$\texttt{pattern count} = {}_nC_n + {}_nC_{n-1} + \ldots + {}_nC_1$$

Here, the given period may be the length of the entire signal sequence. For example, if the symbol count of the signal sequence is 840 symbols, the given period may have a length of 840-symbols from 0 to 839. Interval 0, interval 1, interval 2, and interval 3 may have respectively, for example, a length of 210 symbols from 0 to 209, a length of 210 symbols from 210 to 419, a length of 210 symbols from 420 to 629, and a length of 210 symbols from 630 to 839. When interval 0, interval 1, interval 2, and interval 3 are selected as transmission intervals of the signal sequence, for example, the 0th symbol to the 209th symbol, the 210th symbol to the 419th symbol, the 420th symbol to the 629th symbol, and the 630th symbol to the 839th symbol of each selected signal sequence may be transmitted, respectively.

Operation of the mobile station 11 will be described. The mobile station 11 selects a signal sequence for the call request signal and a transmission pattern for the call request signal, based on the reception level of a notify signal transmitted from the base station. If the reception level of the notify signal is divided into levels equivalent in number to the intervals that the given period is divided, for example 4, when the reception level is at the lowest level, the mobile station 11 may select pattern type (1) (pattern 0). If the reception level increases by 1 level, the mobile station 11 may select the patterns of pattern type (2). If the reception level again increases by 1 level, the mobile station 11 may select the patterns of pattern type (3) and if the reception level becomes the highest level, the mobile station 11 may select the patterns of pattern type (4). By such configuration, interference caused by the mobile station continuously transmitting the call request signal for a long time while the reception level is at a high state, can be suppressed. The mobile station 11 transmits the selected signal sequence of the call request signal, by the selected transmission pattern. The call request signal is, for example, transmitted by a random access channel (RACH).

The mobile station 11, in place of the reception level of the notify signal, may select a signal sequence of the call request signal and a transmission pattern for the call request signal, based on information concerning the distance between the mobile station and the base station. The information concerning the distance between the mobile station and the base station is, for example, obtained from position information of the mobile station and from position information of the base station. In general, position information of the base station is already known. The mobile station, for example, can acquire position information thereof by using a Global Positioning System (GPS) function of the mobile station. Alternatively, the mobile station can acquire the position information, based on the reception level of signals transmitted from multiple base stations.

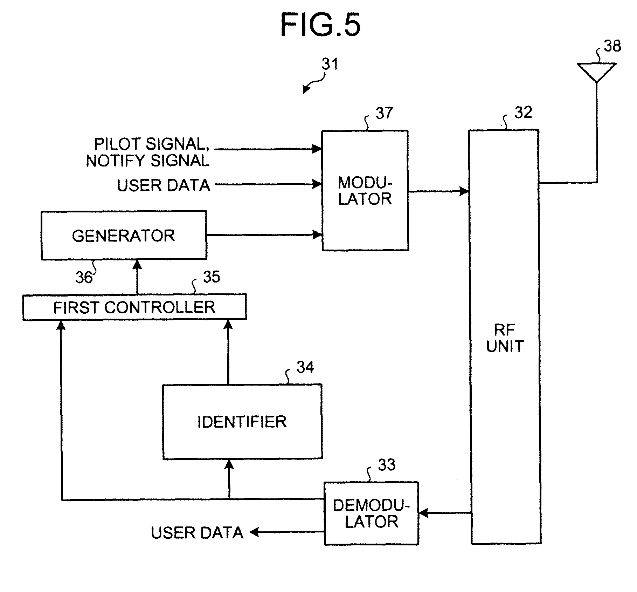

FIG. 5 is a block diagram of the base station according to the second embodiment. As depicted in FIG. 5, a base station 31 includes an RF unit 32, a demodulator 33, an identifier 34, a first controller 35, a generator 36, a modulator 37, and an antenna 38. The RF unit 32 converts a wireless signal received by the antenna 38 into a baseband signal. The RF unit 32 further converts the baseband signal output from the modulator 37 into a wireless signal. The wireless signal output from the RF unit 32 is transmitted from the antenna 38. The demodulator 33 demodulates the baseband signal output from the RF unit 32 and outputs various types of control information and user data. The identifier 34 calculates the correspondence values for the entire signal sequence of the call request signal and the correspondence value for each interval, based on the control information output from the demodulator 33, and by detecting the power, identifies the preamble number and the transmission pattern of the call request signal. The identifier 34 further obtains timing advance, based on the reception timing of the call request signal and reference timing. The identifier 34, for example, detects the power by detecting the amplitude of the received call request signal. Details of the configuration of the identifier 34 are described hereinafter. The base station 31 can identify the mobile station, based on the preamble number and the transmission pattern of the call request signal. Based on various types of information including the preamble number, the transmission pattern, and the timing advance of the call request signal, the first controller 35 controls the generation of a signal, such as the call-request response signal and the connection-request response signal, necessary in the establishment of a link. The generator 36 generates the call-request response signal and the connection-request response signal, based on the output signal of the first controller 35. The modulator 37 modulates transmission signals such as the call-request response signal and the connection-request response signal generated by the generator 36. The modulator 37 further modulates user data, pilot signals, and notify signal. The antenna 38, the RF unit 32, and the demodulator 33 operate as the receiver in the first embodiment.

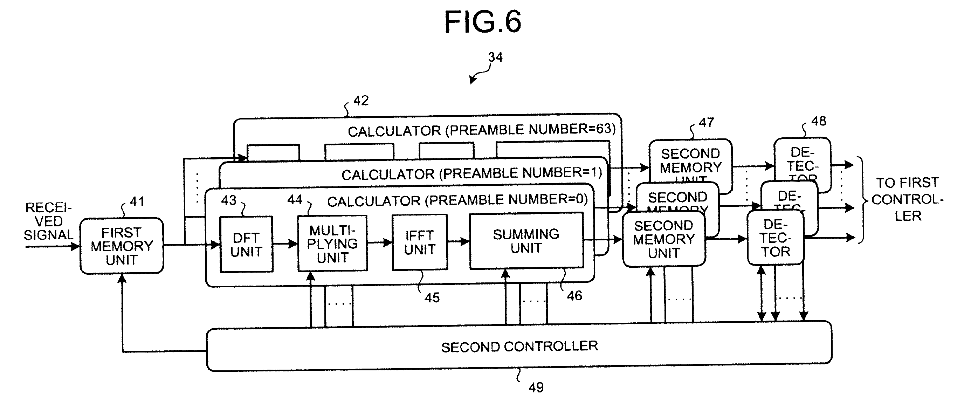

FIG. 6 is a block diagram of the identifier of the base station according to the second embodiment. As depicted in FIG. 6, the identifier 34 includes a first memory unit 41, a calculator 42, a second memory unit 47, a detector 48, and a second controller 49. The calculator 42, the second memory unit 47, and the detector 48 are provided for each preamble number of the call request signal. For example in an LTE system, preamble numbers of 0 to 63 are provided. In other words, there are 64 types of signal sequences for the call request signal. The first memory unit 41 stores the received call request signal. The calculator 42 calculates correspondence values for the signal sequence of the received call request signal and a signal sequence (replica) set as a predetermined preamble number xx (e.g., xx=0, 1, 2...63). The second memory unit 47 stores the correspondence values calculated by the calculator 42. The detector 48 detects the transmission pattern, the timing advance, and the power of the call request signal, based on the calculated correspondence values. The detection results obtained by the detector 48 are forwarded to the first controller 35 of the base station 31 depicted in FIG. 5. The second controller 49 controls the operation of the first memory unit 41, a multiplying unit 44, a summing unit 46, the second memory unit 47, and the detector 48 and, obtains the correspondence values for the given period (the entire signal sequence) of the call request signal and the correspondence value of each interval.

The calculator 42 includes a discrete Fourier transform (DFT) unit 43, the multiplying unit 44, an inverse fast Fourier transform (IFFT) unit 45, and the summing unit 46. The DFT unit 43 converts the received signal to the frequency axis. The multiplying unit 44 generates a replica of the preamble number xx and multiplies the replica and the received signal. The IFFT unit 45 converts the frequency-axis based signal to a time-axis based signal. The summing unit 46 sums the power of the signal output from the IFFT unit 45 and calculates the correspondence values. In this manner, in a configuration where the correspondence values are calculated on the frequency axis, by storing the call request signal to the first memory unit 41, the correspondence values for the entire signal sequence of the call request signal and the correspondence value for each interval can be obtained. Configuration may be such that calculation of the correspondence values is on the time axis. In such a configuration, the first memory unit 41 may be omitted.

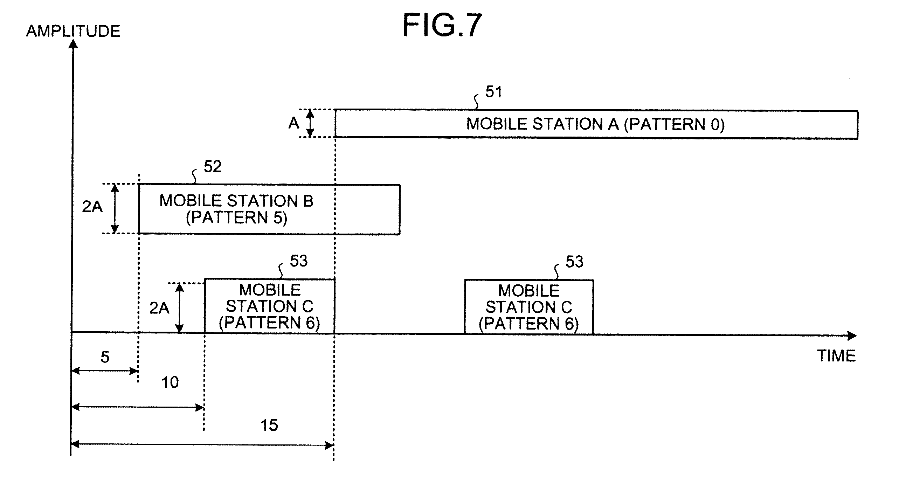

FIG. 7 is a diagram of one example of arrival timing in the second embodiment. In FIG. 7, for example, it is assumed that mobile station A, mobile station B, and mobile station C are transmitting a call request signal of the same signal sequence. For example, the transmission power (amplitude) and transmission pattern of mobile station A are respectively assumed to be A and the pattern 0. For mobile station B, the transmission power (amplitude) is assumed to be 2A and the transmission pattern is assumed to be the pattern 5. For mobile station C the transmission power (amplitude) is assumed to be 2A and the transmission pattern is assumed to be the pattern 6. As depicted in FIG. 7, at the base station 31, it is assumed that the call request signal 51 from mobile station A arrives 15 samples off from the reference timing, the call request signal 52 from mobile station B arrives 5 samples off from the reference timing, and the call request signal 53 from the mobile station C arrives 10 samples off from the reference timing.

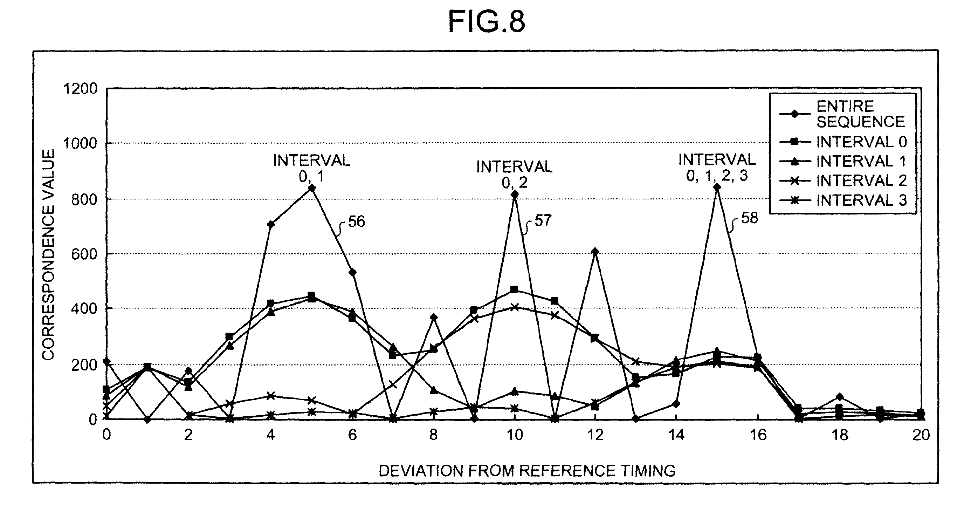

FIG. 8 is a graph of an example of correspondence value detection results in the second embodiment. In the case of the example depicted in FIG. 7, as depicted in FIG. 8, when the correspondence values for the given period (the entire signal sequence) are obtained, as indicated by the curve "entire sequence" in FIG. 8, at 5, 10, and 15 samples off from the reference timing, peaks of the correspondence values appear. In this example, since the signal sequence is assumed to be 0 to 839 symbols, the correspondence values of the first peak 56 when the deviation from the reference timing is 5 samples, of the second peak 57 when the deviation from the reference timing is 10 samples, and the third peak 58 when the deviation from the reference signal is 15 samples are all values near 839. In this manner, the base station 31, by obtaining correspondence values for the given period (the entire signal sequence) via the identifier 34, is able to know that several peaks having correspondence values near 839 are present and is able to know how much each of the peaks deviates from the reference timing.

Further, by obtaining via the identifier 34, a correspondence value for each of the intervals "interval 0", "interval 1", "interval 2", and "interval 3", the following correspondence value results can be obtained. For example, when the timing deviates from the reference timing by 5 samples, the correspondence value of "interval 0" is approximately 419, the correspondence value for "interval 1" is approximately 419, and when the two correspondence values are added, the sum is substantially the same as the correspondence value of the first peak 56. On the other hand, the correspondence values for "interval 2" and "interval 3" are both substantially 0. Therefore, it is known that the first peak 56 is caused by the mobile station (in the example depicted in FIG. 7, mobile station B) that is transmitting the call request signal at "interval 0" and "interval 1". Similarly, it is known that the second peak 57 is caused by the mobile station (in the example depicted in FIG. 7, mobile station C) that is transmitting the call request signal at "interval 0" and "interval 2". Further, for example, when the timing deviates from the reference timing by 15 samples, the correspondence values of "interval 0", "interval 1", "interval 2", and "interval 3" are approximately 209 and the sum of which is substantially equivalent to the correspondence value of the third 3 peak 58. Therefore, it is known that the third peak 58 is caused by the mobile station (in the example depicted in FIG. 7, mobile station A) that is transmitting the call request signal at "interval 0", "interval 1", "interval 2", and "interval 3".

In this manner, based on the correspondence values for the given period and the correspondence value of each interval, the base station 31 can know the number of mobile stations (in this example, 3) that are transmitting call request signals of the same signal sequence. In other words, the base station 31 can be discriminated each mobile station among mobile stations transmitting a call request signal of the same signal sequence. The second controller 49 of the identifier 34, after obtaining the correspondence values for the given period (the entire signal sequence), may control the operation of the first memory unit 41, the multiplying unit 44, the summing unit 46, the second memory unit 47, and the detector 48 to obtain the correspondence value of each interval. The second controller 49 may omit the process of obtaining the correspondence value of each interval, when there is no peak in the correspondence values of the given period (the entire signal sequence).

Operation of the base station 31 will be described. When the base station 31 receives a call request signal, the second controller 49 instructs the first memory unit 41, the calculator 42, and the second memory unit 47 to calculate the correspondence values for the given period (the entire signal sequence). The first memory unit 41 stores the received signal and outputs the entire call request signal to the calculator 42. The received data stored by the first memory unit 41 is used in calculating the correspondence value for each interval. The calculator 42 calculates correspondence values concerning the entire signal sequence of the call request signal and outputs the correspondence results to the second memory unit 47. The second memory unit 47 stores the correspondence results for entire signal sequence of the call request signal and outputs the results to the detector 48. The detector 48 determines whether a peak that is greater than or equal to a threshold is present, based on the correspondence results for the entire signal sequence. The detector 48 notifies the second controller 49 that no peak is present, upon determining that no peak greater than or equal to the threshold is present. The second controller 49, upon receiving notification that no peak is present, performs control such that correspondence values for each interval are not calculate with respect to the signal sequence of the call request signal for which no peak is present. The detector 48 notifies the second controller 49 that a peak is present, upon determining that a peak greater than or equal to the threshold is present. The second controller 49, upon receiving notification that a peak is present, controls the first memory unit 41, the calculator 42, and the second memory unit 47 to calculate a correspondence value for each interval with respect to the signal sequence of the call request signal for which a peak is present.

The sequence in which each correspondence value for each interval is calculated is arbitrary.

When a correspondence value is calculated for each interval, the first memory unit 41 outputs to the calculator 42, the call request signal of the interval specified by the second controller 49. The calculator 42 calculates the correspondence value for the call request signal of the interval specified by the second controller 49 and outputs the result to the second memory unit 47. When the same process has been completed for all of the intervals, the second controller 49 notifies the detector 48 that all of the correspondence values have been calculated. The detector 48 outputs to the first controller 35 of the base station 31 depicted in FIG. 5, the number of mobile stations that are transmitting a call request signal of the same signal sequence, the transmission pattern, deviation from the reference timing, and peak detection results based on the correspondence values for the given period (the entire signal sequence) and the correspondence value calculated for each interval. Configuration may be such that after the received signal is first stored to the first memory unit 41, the process of calculating the correspondence values for the given period (the entire signal sequence) and the correspondence value of each interval begins.

Upon identifying the mobile stations based on the signal sequence of the call request signal and the transmission pattern, the base station 31 transmits to each mobile station, a call-request response that includes a signal (TA) that controls the transmission timing of the mobile station so that the signals transmitted by the mobile station arrive at the reference timing and an uplink-communication enabling signal. One example of the method of notifying each mobile station of the call-request response will be described.

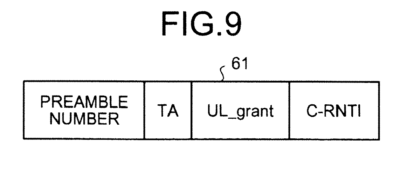

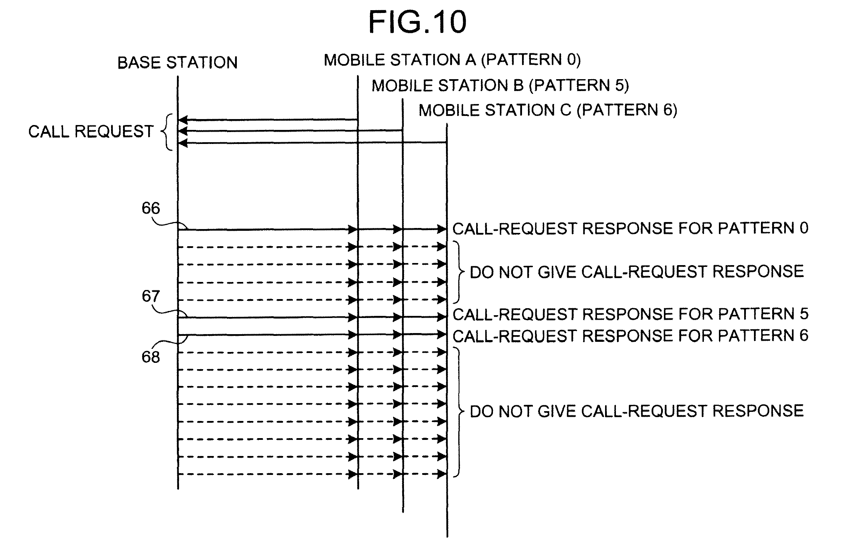

FIG. 9 is a diagram of one example of a frame format of the call-request response in the second embodiment. FIG. 10 is a sequence diagram of one example of a method of giving notification of the call-request response in the second embodiment. As depicted in FIG. 9, a call-request response 61, for example, includes the preamble number, the timing advance (TA), UL_grant, and the connection radio network temporary identifier (C-RNTI) of the call request signal. The base station 31, for example, notifies the mobile stations of the call-request response 61 depicted in FIG. 9, at a timing that differs for each mobile station transmission pattern. For example, the base station 31, via a notify signal, notifies each mobile station (within the cell) of the call-request-response notification timing corresponding to the transmission patterns of the mobile stations. The base station 31 does not give notification of the call-request response at timings corresponding to transmission patterns that were not detected.

For instance, as depicted in FIG. 10, in the case of the example depicted in FIG. 7, at each corresponding timing for pattern 0, pattern 5, and pattern 6, the base station 31 gives notification of call-request responses 66, 67, 68, which include the TA and C-RNTI for the mobile stations from which call request signals have been received by pattern 0, pattern 5, and pattern 6 respectively. In the case of the example depicted in FIG. 7, the base station 31, at the corresponding timing for patterns 1, 2, 3, 4, 7, 8, 9, 10, 11, 12, 13, and 14, does not given notification of a call-request response. Each of the mobile stations knows the pattern when the mobile station transmitted the call request signal and therefore, each of the mobile stations receive a call-request response signal at the timing corresponding to the pattern when the mobile station transmitted the call request signal. Further, each of the mobile stations determines whether a received call-request response is intended for the mobile station by identifying the preamble number of the received call-request response.

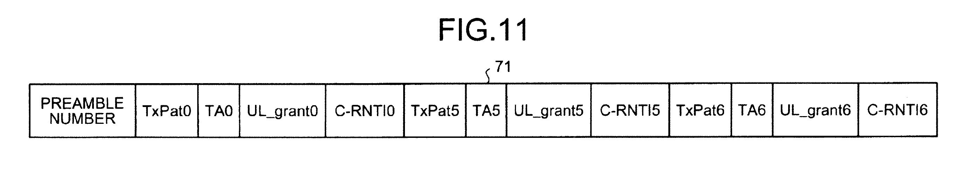

FIG. 11 is a diagram of another example of a frame format of a call-request response in the second embodiment. As depicted in FIG. 11, a call-request response 71 may include the TA and C-RNTI of multiple mobile stations from which call request signals of having the same preamble number and received by different pattern. In FIG. 11, "TxPat0", "TA0", "UL_grant0", and "C-RNTI0" is information to be given to the mobile station from which a call request signal was received by pattern 0. In the example depicted in FIG. 11, in one call-request response 71, information for the mobile station that transmitted a call request signal by pattern 0, information for the mobile station that transmitted a call request signal by pattern 5, and information for the mobile station that transmitted the call request signal by pattern 6 are included. Each of the mobile stations identifies the preamble number of the received call-request response and refers to the field corresponding to the transmission pattern of the mobile station to acquire the information intended for the mobile station.

According to the second embodiment, for example, the signal sequence of a call request signal has 64 types and since there are 15 transmission patterns for the call request signal, there is a total of 960 combinations (=64 sequences×15 patterns) of information for discriminating the mobile stations. In other words, during the negotiation to establish a link between a mobile station and the base station, the information for discriminating the mobile stations increases. Therefore, similar to the first embodiment, different mobile stations can be respectively discriminated by the base station.


(Third embodiment)

A third embodiment assumes, in the second embodiment, for example, each interval by which the given period is divided has a length of the entire signal sequence and the given period has a length that is a multiple of the entire signal sequence. For example, the given period may be a length that is 4 repetitions of the entire signal sequence. At each interval, for example, symbols 0 to 839 of the call request signal are transmitted. The configuration and operation of the mobile station as well as the configuration and operation of the base station, etc. are identical to those of the second embodiment. However, the identifier of the base station may have the following difference. In the third embodiment, components identical to those in the second embodiment are given the same reference numerals used in the second embodiment and description redundant is omitted.

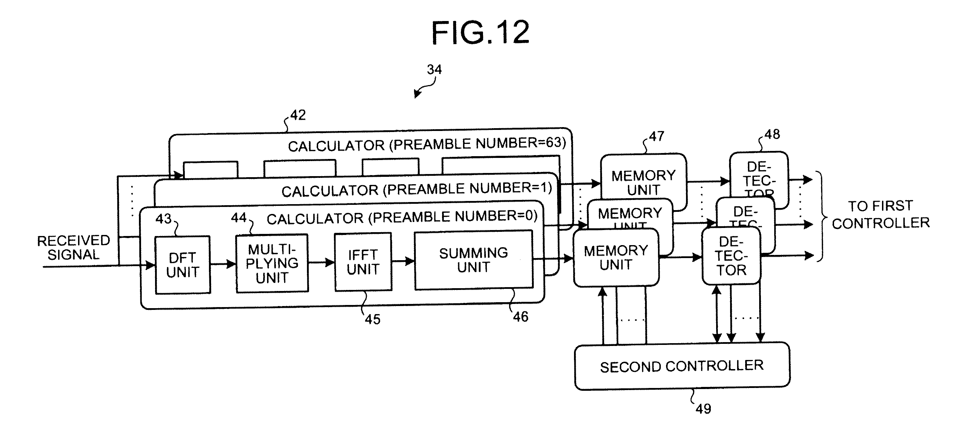

FIG. 12 is a block diagram of the identifier of the base station according to the third embodiment. As depicted in FIG. 12, the identifier 34 does not include the first memory unit 41 of the second embodiment. Therefore, in FIG. 12, the second memory unit 47 in the second embodiment is represented as a single memory unit 47. Further, the second controller 49 controls operation of the memory unit 47 and the detector 48 and, obtains the correspondence values for the given period (for 4 repetitions of the entire signal sequence, for example) of the call request signal and the correspondence value of each interval (the entire signal sequence). Other aspects of the configuration of the identifier 34 are identical to those in second embodiment.

Operation of the base station 31 will be described. For example, the given period is assumed to be a length that is 4 repetitions of the entire signal sequence. When the base station 31 receives the call request signal of the first interval, the second controller 49 notifies the memory unit 47 of the calculation of the correspondence value. Through this notification, the second controller 49 is able to notify the second memory unit 47 of the timing of the start of the process for calculating the correspondence value. The signal of the first interval of the call request signal is input to the calculator 42. The calculator 42 calculates correspondence values for the entire signal sequence of the first interval of the call request signal and outputs the correspondence results to the memory unit 47. The memory unit 47 stores the peak value among the correspondence results for the first interval of the call request signal and the timing of the peak, based on the correspondence result for the entire signal sequence of the first interval of the call request signal.

Subsequently, the signal of the second interval of the call request signal is input to the calculator 42 and similar to the first interval, correspondence values are calculated, and the peak value of the correspondence results for the second interval of the call request signal and the timing of the peak are stored by the memory unit 47. For the third and fourth intervals of the call request signal, similar processes are performed. The given period, for example, when processes for 4 repetitions of the entire signal sequence has finished, the memory unit 47 outputs the peak value of the correspondence results for each interval and the timing of each peak to the detector 48.

The detector 48 calculates the correspondence values for the given period, based on the peak value for each interval and the timing of each peak forwarded by the memory unit 47. Configuration may be such that in the memory unit 47, the correspondence values for the given period are calculated based on the peak value for each interval and the timing of each peak. The detector 48 determines whether a peak greater than or equal to a threshold is present, based on the correspondence values for the given period and the peak value of the correspondence results for each interval. When a peak greater than or equal to the threshold is present, the detector 48 outputs the number of mobile stations that are transmitting call request signals of the same signal sequence, the transmission pattern, the deviation from the reference timing, and the peak detection results to the first controller 35 of the base station 31 depicted in FIG. 5.

For instance, in the example depicted in FIG. 7, the correspondence value detection results in the third embodiment are identical to FIG. 8. However, when the signal sequence is, for example, 0 to 839 symbols, correspondence values of the first peak 56, the second peak 57, and the third peak 58 are each values nearly 4 times 839. Further, for example, at a timing 5 samples off from the reference timing, the correspondence values of "interval 0", "interval 1", "interval 2", and "interval 3" are approximately 1678, 1678, 272, and 112, respectively. Therefore, the first peak is a peak caused by the mobile station (in the example depicted in FIG. 7, mobile station B) that is transmitting a call request signal at "interval 0" and "interval 1".

Similarly, for example, at a timing 10 samples off from the reference timing, the correspondence values for "interval 0", "interval 1", "interval 2", and "interval 3" are approximately 1678, 408, 1678, and 156, respectively. Therefore, the second peak 57 is a peak caused by the mobile station (in the example depicted in FIG. 7, mobile station C) that is transmitting a call request signal at "interval 0" and "interval 2". For example, at a timing 15 samples off from the reference signal, the correspondence values of "interval 0"', "interval 1", "interval 2" and "interval 3" are approximately 839, respectively. Therefore, the third peak 58 is a peak caused by the mobile station (in the example depicted in FIG. 7, mobile station A) that is transmitting a call request signal at "interval 0", "interval 1", "interval 2", and "interval 3". According to the third embodiment, similar effects to those of the second embodiment are obtained.

(Fourth embodiment)

Configuration may be such that according to the interval, the signal sequence to be transmitted differs. A fourth embodiment, assumes in the second or the third embodiment, selection of, for example, 2 or more different signal sequence as the signal sequence and transmission of the differing signal sequences by 2 or more intervals among the intervals into which the given period is divided.

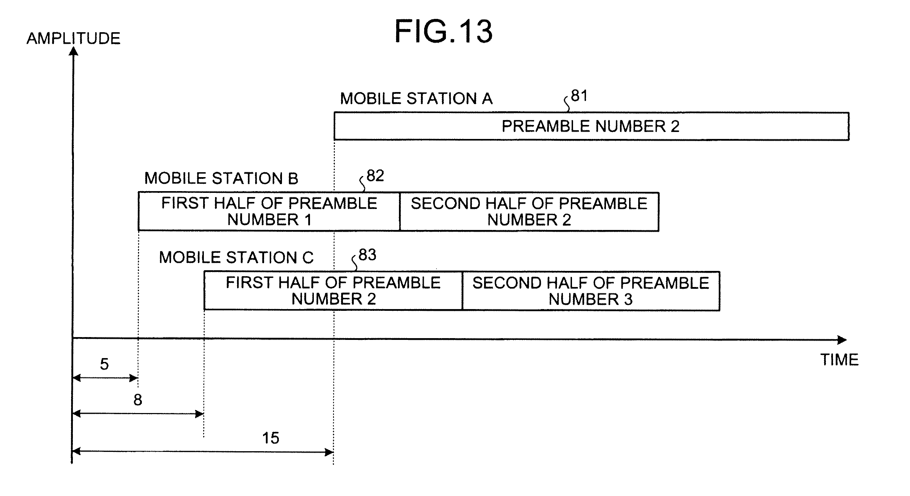

FIG. 13 is a diagram of one example of arrival timing in the fourth embodiment. In FIG. 13, it is assumed that mobile station A, for example, during an entire given period, transmits a call request signal 81 of a signal sequence whose preamble number is 2. Mobile station B, for example, is assumed to be transmitting a call request signal 82 that includes the first half of a signal sequence whose preamble number is 1 and the second half of the signal sequence whose preamble number is 2. Mobile station C, for example, is assumed to be transmitting a call request signal 83 that includes the first half of a signal sequence whose preamble number is 2 and the second half of the signal sequence whose preamble number is 3.

For example, the first half of each signal sequence is transmitted at interval 0 of the first half of the given period. For example, the second half of each signal sequence is interval 1 of the second half of the given period. For example, mobile station B, at interval 0, transmits the first half of the signal sequence whose preamble number is 1 and at interval 1, transmits the second half of the signal sequence whose preamble number is 2. Mobile station A, at interval 0, transmits the first half of the signal sequence whose preamble number is 2 and at interval 1, transmits the second half of the signal sequence whose preamble number is 2.

The call request signal 81 from mobile station A is assumed to arrive at the base station 15 samples off from the reference timing. The call request signal 82 from mobile station B is assumed to arrive at the base station 5 samples off from the reference timing. The call request signal 83 from mobile station C is assumed to arrive 8 samples off from the reference timing.

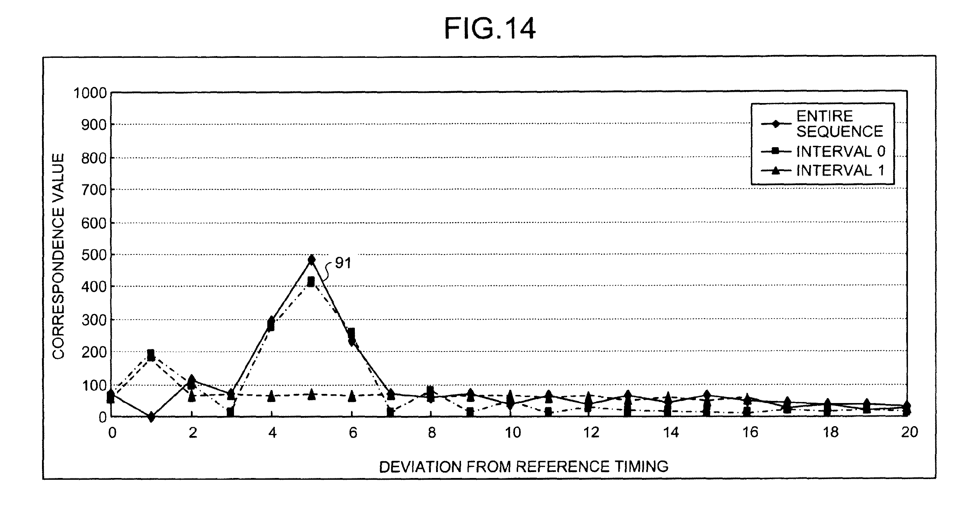

FIG. 14 is a graph of an example of correspondence value detection results in the fourth embodiment. FIG. 14 depicts correspondence value detection results for the signal sequence whose preamble number is 1. In the case of the example depicted in FIG. 13, as depicted in FIG. 14, when the correspondence values for the given period are obtained for the signal sequence whose preamble number is 1, as indicated by the curve "entire sequence" in FIG. 14, a peak 91 of the correspondence values appears at a timing that is 5 samples off from the reference timing.

If the signal sequence is, for example, 0 to 839 symbols, the correspondence values of "entire sequence" and the correspondence value of "interval 0" are on the order of half of 839. In contrast, the correspondence value of "interval 1" is a value nearly 0. Therefore, the base station can determine that concerning the peak of "interval 0" appearing at a timing 5 samples off from the reference timing, the level of the correspondence value is not low consequent to multiple paths. The base station can determine that at an interval half of the given period, i.e., at interval 0, the signal sequence having a preamble number of 1 is transmitted from the mobile station.

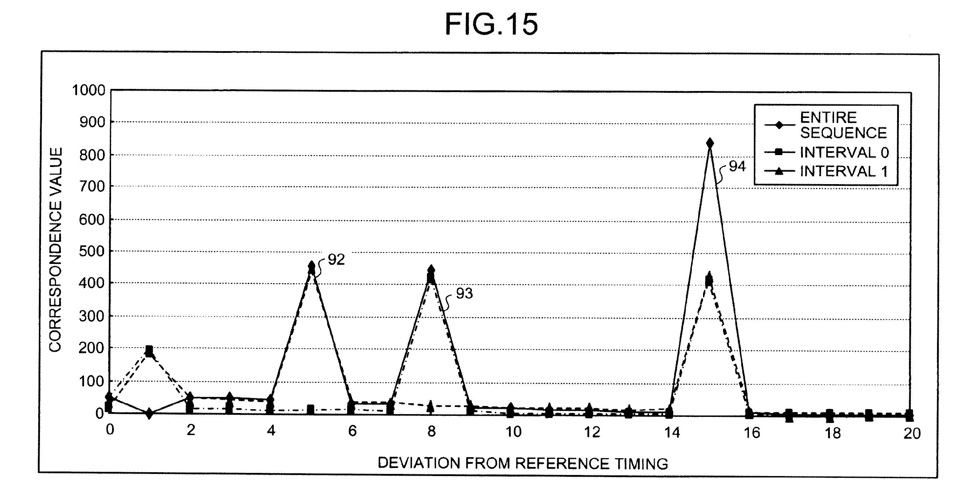

FIG. 15 is a graph of an example of correspondence value detection results in the fourth embodiment. FIG. 15 depicts correspondence value detection results for the signal sequence whose preamble number is 2. In the case of the example depicted in FIG. 13, as depicted in FIG. 15, when the correspondence values for the given period are obtained for the signal sequence whose the preamble number is 2, as indicated by the "entire sequence" curve in FIG. 15, a first peak 92, a second peak 93, and a third peak 94 of the correspondence values appear at timings 5 samples, 8 samples, and 15 samples off from the reference timing, respectively.

When the signal sequence is, for example, 0 to 839 symbols, at the first peak 92, the correspondence value of "entire sequence" and the correspondence value of "interval 1" are values on the order of half of 839; and the correspondence value of "interval 0" is a value nearly 0. Therefore, the base station can determine that concerning the peak of "interval 1" appearing at the timing 5 samples off from the reference timing, the level of the correspondence value is not low consequent to multiple paths and at interval 1, the signal sequence having a preamble number of 2 is transmitted from the mobile station.

At the second peak 93, the correspondence value of "entire sequence" and the correspondence value of "interval 0" are values on the order of half of 839; and the correspondence value of "interval 1" is a value nearly 0. Therefore, the base station can determine that concerning the peak of "interval 0" appearing at the timing 8 samples off from the reference timing, the level of the correspondence value is not low consequent to multiple paths and at interval 0, the signal sequence having the preamble number of 2 is transmitted from the mobile station.

At the third peak 94, the correspondence value of "entire sequence" is on the order of 839; and the correspondence value of "interval 0" and the correspondence value of "interval 1" are values on the order of half of 839. Therefore, the base station can determine that concerning the peaks of "interval 0" and "interval 1" appearing at the timing 15 samples off from the reference timing, the level of the correspondence value is not low consequent to multiple paths and at interval 0 and interval 1, the signal sequence having a preamble number of 2 is transmitted from the mobile station.

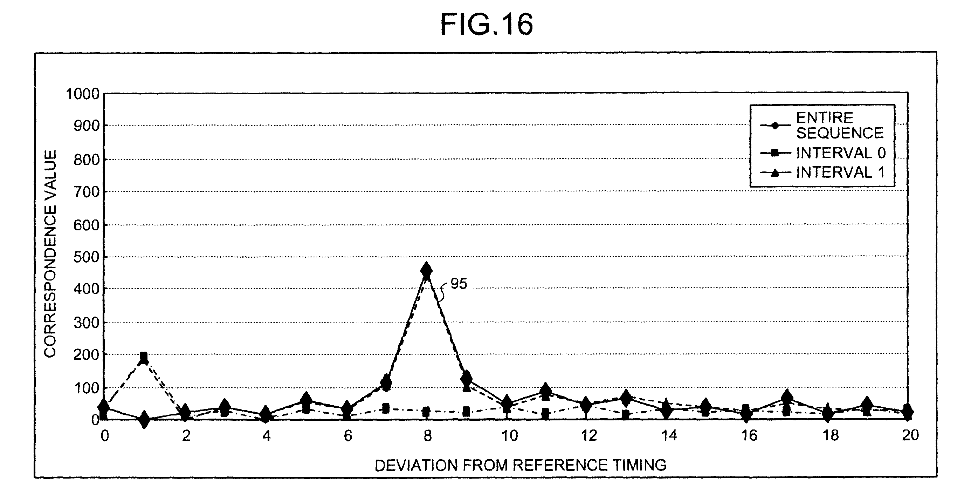

FIG. 16 is a graph of an example of correspondence value detection results in the fourth embodiment. FIG. 16 depicts correspondence value detection results for the signal sequence whose preamble number is 3. In the case of the example depicted in FIG. 13, as depicted in FIG. 16, when the correspondence values for the given period are obtained for the signal sequence whose preamble number is 3, as indicated by the "entire sequence" in FIG. 16, a peak 95 of the correspondence value appears at a timing 8 samples off from the reference timing.

When the signal sequence is, for example, 0 to 839 symbols, the "entire sequence" correspondence value and the correspondence value of "interval 1" are values on the order of half of 839. In contrast, the correspondence value of "interval 0" is a value nearly 0. Therefore, the base station can determine the concerning the peak of "interval 1" appearing at the timing 8 samples off from the reference timing, the level of the correspondence value is not low consequent to multiple paths. The base station can determine that at an interval half of the given period, i.e., at interval 1, the signal sequence having a preamble number of 3 is transmitted from the mobile station.

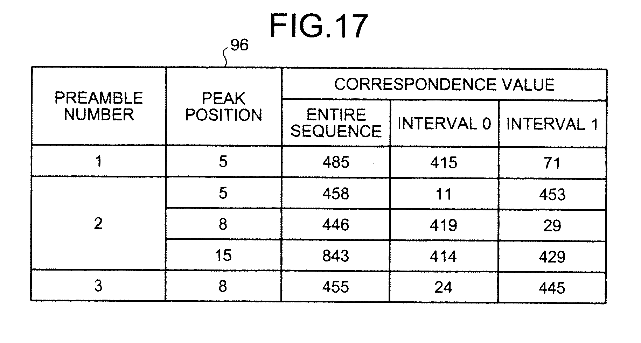

FIG. 17 is a table of one example of correspondence value detection results in the fourth embodiment. When the correspondence value detection results for the signal sequence whose preamble numbers are 1, 2, and 3, respectively, are organized, a table such as table 96 depicted in FIG. 17 is created. As depicted in FIG. 17, from table 96 it can be known that a peak 5 samples off from the reference timing is a peak caused by a mobile station that makes a call request by transmitting at interval 0, a signal sequence whose preamble number is 1 and at interval 1, a signal sequence whose preamble number is 2. In the example depicted in FIG. 13, this corresponds to mobile station B. Further, from table 96, it can be known that a peak 8 samples off from the reference timing is a peak caused by a mobile station that makes a call request by transmitting at interval 0, a signal sequence whose preamble number is 2 and at interval 1, a signal sequence whose preamble number is 3. In the example depicted in FIG. 13, this corresponds to mobile station C. From table 96, it can be further known that a peak 15 samples off from the reference timing is a peak caused by a mobile station that make a call request by transmitting at interval 0 and interval 1, a signal sequence whose preamble number is 2. In the example depicted in FIG. 13, this corresponds to mobile station A. In this manner, when multiple mobile stations that are using signal sequences having the same preamble number to make a call request are present, the base station can recognize that call requests from multiple mobile stations are being received.

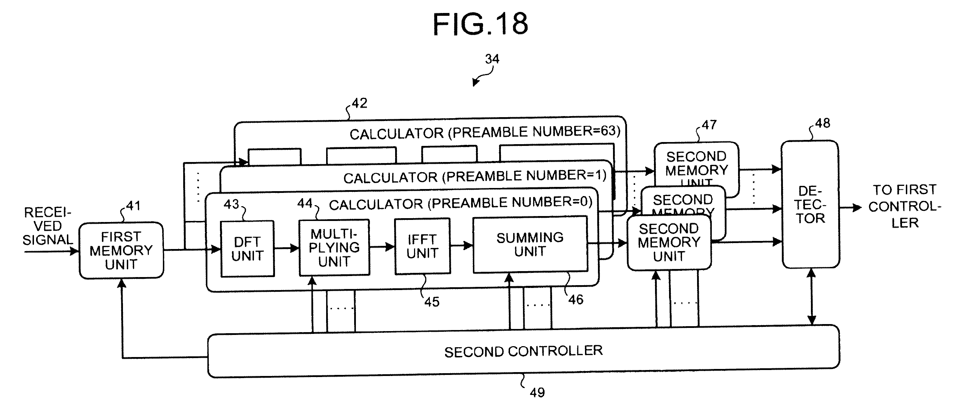

FIG. 18 is a block diagram of the identifier of the base station according to the fourth embodiment. In FIG. 18, similar to the second embodiment, a configuration of the identifier 34 is depicted in a case where the given period is the entire signal sequence and the entire signal sequence is divided into intervals. In the fourth embodiment, detection of the transmission pattern, timing advance, and power of a call request signal is performed based on correspondence values of signal sequence of all of the preamble numbers. Therefore, as depicted in FIG. 18, the identifier 34 includes the detector 48 disposed commonly for all of the second memory units 47. Other aspects of the configuration of the identifier 34 are identical to those of the second embodiment.

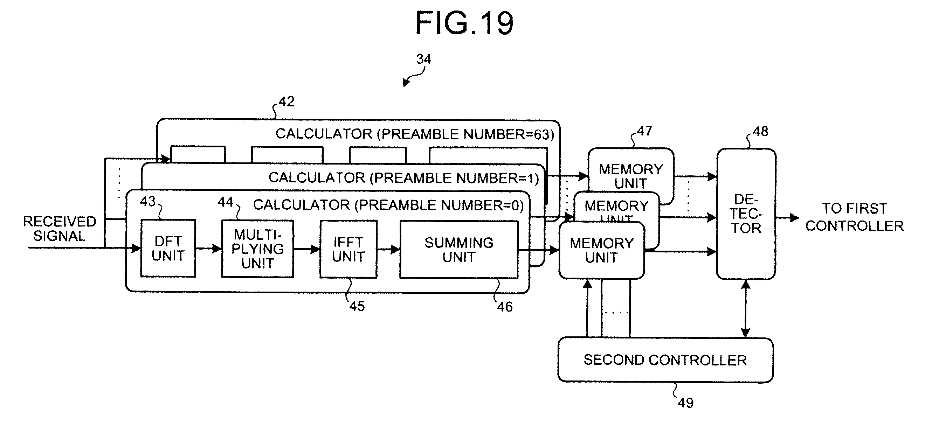

FIG. 19 is a block diagram of the identifier of the base station according to the fourth embodiment. In FIG. 19, similar to the third embodiment, a configuration of the identifier 34 is depicted where the given period is a length that is repetitions of the entire signal sequence and each interval is the length of the entire signal sequence. As depicted in FIG. 19, the identifier 34 includes the detector 48 disposed commonly for all of the second memory units 47. Other aspects of the configuration of the identifier 34 are identical to those of the third embodiment.

In the second, the third, and the fourth embodiments, configuration may be such that the mobile stations are discriminated based on the correspondence value results for each interval, without obtaining the correspondence values for the given period (the entire signal sequence). Further, in the fourth embodiment, the given period may be divided into 3 or more intervals, and as in the second or the third embodiment, intervals that do not transmit a signal sequence may be provided. Further, the given period may be divided into 3 or more intervals, 3 or more different signal sequences may be selected as the signal sequence, and the different signal sequences may be transmitted by 3 or more intervals among the intervals of the given period.

EXPLANATIONS OF LETTERS OR NUMERALS

1    mobile station
2    base station
3    selector
4    transmitter
5    receiver
6    identifier

**Claims**

1.  A wireless communication system comprising:

    a mobile station that includes:

        a selector that from among a plurality of prepared signal sequences, selects one or more arbitrary signal sequences and from among a plurality of intervals included in a given period, selects one or more arbitrary intervals, and
        a transmitter that transmits the signal sequence corresponding to the interval selected by the selector; and

    a base station that includes:

        a receiver that receives a signal transmitted from the mobile station, and
        an identifier that identifies the mobile station, based on a correspondence value in each interval of the received signal.

2.  The wireless communication system according to claim 1, wherein
    the given period is the length of the signal sequence, the interval is the length by which the signal sequence is divided into portions,
    the transmitter transmits a portion of the signal sequence, corresponding to the selected interval,
    the identifier identifies the mobile station, based on correspondence values in the given period and the correspondence value in each interval.

3.  The wireless communication system according to claim 1, wherein
    the given period is of a length that is an integral multiple of the signal sequence and that is at least two times the length of the signal sequence,
    the interval is the length of the signal sequence,
    the transmitter transmits the entire signal sequence by the interval selected by selector, and
    the identifier identifies the mobile station, based on correspondence values in the given period and the correspondence value in each of the intervals.

4.  The wireless communication system according to claim 1, wherein the transmitter, based on the number of intervals selected by the selector, controls transmission power of the intervals.

5.  The wireless communication system according to claim 4, wherein the transmitter controls the transmission power of the selected intervals so that total transmission power in the given period becomes constant.

6.  The wireless communication system according to claim 1, wherein the selector selects the signal sequence and the interval, based on a signal notified by the base station.

7.  The wireless communication system according to claim 1, wherein
    the selector selects two or more signal sequences, and the transmitter transmits the different signal sequences by two or more intervals selected by the selector.

8.  A base station comprising:

    a receiver that receives a signal that is transmitted from a mobile station and that includes a signal sequence selected by the mobile station, from among a plurality of prepared signal sequences; and
    an identifier that identifies the mobile station, based on correspondence values in intervals included in a given period of the signal received by the receiver.

9. The base station according to claim 8, wherein
the given period is the length of the signal sequence, the interval is the length by which the signal sequence is divided into portions,
the identifier identifies the mobile station, based on correspondence values of the entire signal sequence in the given period and respective correspondence values of portions corresponding to the intervals, respectively.

10. The base station according to claim 8, wherein
the given period is of a length that is an integral multiple of the signal sequence and that is at least two times the length of the signal sequence,
the interval is the length of the signal sequence,
the identifier identifies the mobile station, based on correspondence values in the given period and correspondence values of the entire signal sequence in each interval.

11. A mobile station comprising:

a selector that from among a plurality of prepared signal sequences, selects one or more arbitrary signal sequences and from among a plurality of intervals included in a given period, selects one or more arbitrary intervals; and
a transmitter that transmits the signal sequence corresponding to the interval selected by the selector.

12. The mobile station according to claim 11, wherein
the given period is the length of the signal sequence,
the interval is the length by which the signal sequence is divided into portions, and
the transmitter transmits a portion of the signal sequence, corresponding to the interval selected by the selector.

13. The mobile station according to claim 11, wherein
the given period is of a length that is an integral of the signal sequence and that is at least two times the length of the signal sequence,
the interval is the length of the signal sequence, and the transmitter transmits the entire signal sequence by the interval selected by the selector.

14. The mobile station according to claim 11, wherein the transmitter, based on the number of intervals selected by the selector, controls transmission power of the intervals.

15. The mobile station according to claim 14, wherein the transmitter controls the power of the selected intervals so that total transmission power in the given period becomes constant.

16. The mobile station according to claim 11, wherein the selector selects the signal sequence and the interval, based on a signal notified by the base station.

17. A wireless communication method comprising:

selecting at a mobile station and from among a plurality of prepared signal sequences, one or more arbitrary signal sequences and from among a plurality of intervals included in a given period, further selecting one or more arbitrary intervals;
transmitting from the mobile station, the signal sequence by the interval selected at the selecting;
receiving at a base station, a signal transmitted from the mobile station; and
identifying at the base station and based on a correspondence value in each interval of the signal received at the receiving, the mobile station.

18. The wireless communication method according to claim 17, wherein
the given period is the length of the signal sequence, the interval is the length by which the signal sequence is divided into portions,
the mobile station, at the transmitting, transmits a portion of the signal sequence, corresponding to the interval selected at the selecting,
the base station, at the identifying, identifies the mobile station, based on correspondence values in the given period and the correspondence value in each of the intervals.

19. The wireless communication method according to claim 17, wherein
the given period is of a length that is an integral multiple of the signal sequence and that is at least two times the length of the signal sequence,
the interval is the length of the signal sequence,
the mobile station, at the transmitting, transmits the entire signal sequence by the interval selected at the selecting, and
the base station, at the identifying, identifies the mobile station, based on correspondence values in the given period and the correspondence value in each of the intervals.

20. The wireless communication method according to claim 16, wherein
the mobile station, at the selecting, selects two or more arbitrary signal sequences, and
the mobile station, at the transmitting, transmits different signal sequences by the two or more intervals selected at the selecting.

# FIG.1

MOBILE STATION 1

TRANSMITTER 4

SELECTOR 3

BASE STATION 2

RECEIVER 5

IDENTIFIER 6

# FIG.2

START

PROCESSES AT MOBILE STATION

SELECT SIGNAL SEQUENCE AND INTERVALS — S1

TRANSMIT SIGNAL SEQUENCE AT SELECTED INTERVALS — S2

PROCESSES AT BASE STATION

RECEIVE SIGNAL FROM MOBILE STATION — S3

IDENTIFY MOBILE STATION, BASED ON CORRESPONDENCE VALUE OF EACH INTERVAL — S4

END

# FIG.3

# FIG.4

# FIG.5

# FIG.6

RECEI-
VED
SIGNAL

FIRST
MEMORY
UNIT 41

CALCULATOR (PREAMBLE NUMBER=63) 42

CALCULATOR (PREAMBLE NUMBER=1)

CALCULATOR (PREAMBLE NUMBER=0)

DFT
UNIT 43

MULTI-
PLYING
UNIT 44

IFFT
UNIT 45

SUMMING
UNIT 46

SECOND
MEMORY
UNIT 47

SECOND
MEMORY

SECOND
MEMORY
UNIT

DE-
TEC-
TOR 48

DE-
TEC-
TOR

DE-
TEC-
TOR

TO FIRST
CONTROL-
LER

SECOND CONTROLLER 49

34

EP 2 456 258 A1

# FIG.7

AMPLITUDE

51
MOBILE STATION A (PATTERN 0)
A

52
MOBILE STATION B
(PATTERN 5)
2A

53
MOBILE
STATION C
(PATTERN 6)
2A

53
MOBILE
STATION C
(PATTERN 6)

5

10

15

TIME

EP 2 456 258 A1

# FIG.8

EP 2 456 258 A1

# FIG.9

61

| PREAMBLE NUMBER | TA | UL_grant | C-RNTI |

# FIG.10

BASE STATION      MOBILE STATION A (PATTERN 0)

MOBILE STATION B (PATTERN 5)

MOBILE STATION C (PATTERN 6)

CALL REQUEST

66

CALL-REQUEST RESPONSE FOR PATTERN 0

DO NOT GIVE CALL-REQUEST RESPONSE

67

CALL-REQUEST RESPONSE FOR PATTERN 5

CALL-REQUEST RESPONSE FOR PATTERN 6

68

DO NOT GIVE CALL-REQUEST RESPONSE

EP 2 456 258 A1

# FIG.11

71

| PREAMBLE NUMBER | TxPat0 | TA0 | UL_grant0 | C-RNTI0 | TxPat5 | TA5 | UL_grant5 | C-RNTI5 | TxPat6 | TA6 | UL_grant6 | C-RNTI6 |
|---|---|---|---|---|---|---|---|---|---|---|---|---|

# FIG.12

RECEIVED SIGNAL

CALCULATOR (PREAMBLE NUMBER=63)

CALCULATOR (PREAMBLE NUMBER=1)

CALCULATOR (PREAMBLE NUMBER=0)

| DFT UNIT | MULTI-PLYING UNIT | IFFT UNIT | SUMMING UNIT |

MEMORY UNIT

MEMORY UNIT

MEMORY UNIT

DE-TEC-TOR

DE-TEC-TOR

DE-TEC-TOR

TO FIRST CONTROLLER

SECOND CONTROLLER

# FIG.13

EP 2 456 258 A1

# FIG.14

# FIG.15

EP 2 456 258 A1

# FIG.16

EP 2 456 258 A1

# FIG.17

96

| PREAMBLE NUMBER | PEAK POSITION | CORRESPONDENCE VALUE | | |
|---|---|---|---|---|
| | | ENTIRE SEQUENCE | INTERVAL 0 | INTERVAL 1 |
| 1 | 5 | 485 | 415 | 71 |
| 2 | 5 | 458 | 11 | 453 |
| | 8 | 446 | 419 | 29 |
| | 15 | 843 | 414 | 429 |
| 3 | 8 | 455 | 24 | 445 |

# FIG.18

EP 2 456 258 A1

# FIG.19

RECEIVED SIGNAL → [DFT UNIT (43)] → [MULTI-PLYING UNIT (44)] → [IFFT UNIT (45)] → [SUMMING UNIT (46)]

CALCULATOR (PREAMBLE NUMBER=0)
CALCULATOR (PREAMBLE NUMBER=1)
CALCULATOR (PREAMBLE NUMBER=63) (42)

34

MEMORY UNIT (47)
MEMORY UNIT
MEMORY UNIT

DE-TEC-TOR (48) → TO FIRST CONTROLLER

SECOND CONTROLLER (49)

EP 2 456 258 A1

## INTERNATIONAL SEARCH REPORT

| International application No. |
| --- |
| PCT/JP2009/062719 |

A. CLASSIFICATION OF SUBJECT MATTER
*H04W28/06(2009.01)i, H04W52/50(2009.01)i, H04W74/00(2009.01)i*

According to International Patent Classification (IPC) or to both national classification and IPC

B. FIELDS SEARCHED

Minimum documentation searched (classification system followed by classification symbols)
H04W28/06, H04W52/50, H04W74/00

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br><br>A | WO 2008/016112 A1 (Matsushita Electric Industrial Co., Ltd.),<br>07 February, 2008 (07.02.08),<br>Figs. 5, 6<br>& EP 2048792 A | 1-3,6-13,<br>16-20<br>4,5,14,15 |
| A | WO 2007/125910 A1 (Matsushita Electric Industrial Co., Ltd.),<br>08 November, 2007 (08.11.07),<br>Par. Nos. [0013] to [0028]<br>& US 2009/0147688 A | 1-20 |
| A | WO 2008/081531 A1 (Fujitsu Ltd.),<br>10 July, 2008 (10.07.08),<br>Abstract<br>(Family: none) | 1-20 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 August, 2009 (06.08.09) | Date of mailing of the international search report<br>18 August, 2009 (18.08.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

**EP 2 456 258 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004297338 A